# EUROPEAN PATENT SPECIFICATION

(11) **EP 1 890 270 B1**
(45) Date of publication and mention of the grant of the patent: **13.06.2012**
(21) Application number: 06119048.4
(22) Date of filing: 16.08.2006
(51) Int. Cl.: G07F 7/10

(54) **Hash of a certificate imported from a smart card**
Hash einer aus einer Chipkarte importierten Bescheinigung
Fonction de hachage d'un certificat importé d'une carte intelligente

(43) Date of publication of application: 20.02.2008
(73) Proprietor: Research In Motion Limited, Waterloo, ON N2L 3W8 (CA)
(72) Inventor: Brown, Michael K, Kitchener Ontario N2M 2Z2 (CA); Adams, Neil, Waterloo Ontario N2K 4E4 (CA); Little, Herb, Waterloo Ontario N2T 2V8 (CA)
(74) Representative: Moore, Barry

(56) References cited:
- EP-A1- 1 633 100
- WO-A-2005/106618
- WO-A-2006/018889
- US-B1- 6 539 093

## Description

Smart Cards (SC) are widely used in conjunction with security measures such as authentication and encryption. For example, in order to access a computerized device and to access information using the computerized device, one may have to couple a smart card to the computerized device. Access to the computerized device and to information may be granted following a successful interaction between the computerized device and the smart card. The interaction may involve user input.

A smart card may be programmed or otherwise set to have security related information. An example is identification information of the smart card itself, for example, a serial number. Another example is an authentication password, where access to functionality of the smart card may require knowledge of the authentication password. A further example is one or more files that include specific items of information, such as personal identification information of one or more authorized users of the smart card.

Yet another example is a certificate / private key pair. A certificate may include a public key that is associated with the private key of the pair, and may also include a signature, identity information and a field defining one or more purposes assigned to the certificate. Private keys are stored in a secure area on the smart card and are not accessible from the outside. Certificates, on the other hand, may be exported from the smart card to other devices.

A certificate may be assigned, for example, for authentication of a user, for encryption of information, for signing information, for securing web browsing, for login into a WEB service and/or for providing an access to a network or a device. A smart card may include one or more certificate / private key pairs.

A certificate that is assigned to a particular purpose may include information specific to the purpose. For example, a certificate assigned for login into a network may include information about the network. The purpose defined in a certificate is not mandatory, and a certificate may be used for any other purpose.

Information is usually initialized into a smart card using dedicated equipment and usually by dedicated personnel, such as members of an IT (Information Technology) department of an organization. A smart card may be initialized for specific purposes with a particular number of certificate / private key pairs that are assigned for these specific purposes. At a later time, however, there may be a need to use the smart card for a purpose that is not defined in any of the certificates. Intervention of the dedicated personnel may then be required in order to initialize an additional certificate / private key pair in the smart card.

WO2006/018889 discloses an information terminal. A card can be removably attached to the information terminal. The card holds user certificates and a secret key and has an encrypting function using the secret key. When an application uses a user certificate, the number of available certificate candidates is reduced, thereby reducing the user's load of certificate selection. A control part of the information terminal manages the user certificates and the user certificate utilization conditions acquired from the card via a card part, and selects an available user certificate. The selected user certificate is used for an encryption communication between the information terminal and a server via a network.

US 6,539,093 describes a Key Ring Organizer (KRO). Users and security aware applications are able to request operations on and manipulate role based digital certificates (and their corresponding private keys) distributed among multiple key rings through the use of a KRO. A key ring can be of any type, including a smart card. In a typical client-server session the KRO is accessed by a secure server application using Key Ring Organizer Language messages sent to the KRO plug-in over a secure protocol (e.g., SSL) to generate, store and select role based keys for use in signing documents or authenticating end-users. The KRO also allows digital key parameters to be configured by the end-user so that authentication request must be authorized by the user as well.

EP 1,633,100 describes a system and method for searching and retrieving certificates. A message management server generates certificate identification data from a message that uniquely identifies a certificate associated with the message. The certificate identification data can then be used to determine whether a given located certificate retrieved from one or more certificate servers in response to a certificate search request is the certificate associated with the message. Only the certificate identification data is needed to facilitate the determination at a user's computing device, so the user does not need to download the entire message in order to make the determination.

A smart card is traditionally initialized with content using dedicated equipment and dedicated personnel, such as members of an IT department of an organization. A smart card may be initialized with one or more pairs of a certificate and a private key and any one of the certificates may be assigned with particular one or two purposes. The purposes may be included in the certificate.

One problem to be solved is that if a smart card is to be used for a particular purpose and there is no certificate initialized on the smart card for this purpose, a fairly complex operation is traditionally needed in order to initialize such a certificate on the smart card. Another problem is that even if a certificate has been initialized on the smart card for this purpose, if a computerized device that is to use the certificate has been upgraded, information about the certificate may have been deleted from the computerized device.

To address this problem, a computerized device may enable a user to select one of the certificates already installed in the smart card for the particular purpose. The user may need to identify himself or herself by entering one or more correct passwords and will then be prompted to select a certificate. The device may import the selected certificate from the smart card.

In one aspect, the device may store a copy of the imported certificate in a memory of the device. To enable the user to use the device to perform a desired operation, the device may verify that the user has coupled an appropriate smart card to the device and that the user has a permission to use the smart card. The device may send a challenge to the smart card and an identification of the selected certificate. The smart card may sign the challenge using the private key corresponding to the previously selected certificate. The device may verify the signature using the copy of the certificate and may permit the user to perform the desired operation.

In a second aspect, the device may calculate a hash of the imported certificate and may store the calculated hash in a memory of the device. The hash may be stored in a region of the memory that is unaffected by upgrades to the device. To enable the user to use the device for the particular purpose, the device may verify that the user has coupled an appropriate smart card to the device and that the user has a permission to use the smart card. The device can import certificates from the smart card; all of them or one by one. The device may calculate the hash of each imported certificate in order to find a match with the previously stored hash. A matching hash, if found by the device, identifies the selected certificate. The smart card may sign the challenge using the private key corresponding to the previously selected certificate. The device may verify the signature using the imported certificate and may permit the user to perform the desired operation.

In a third aspect, the device may calculate a hash of the imported certificate and may store both the calculated hash and a copy of the certificate in a memory of the device. To enable the user to use the device for the particular purpose, the device may verify that the user has coupled an appropriate smart card to the device and that the user has a permission to use the smart card. The device may check whether it stores a copy of the required certificate for that particular purpose and if so, may continue as described in the first aspect. If the device does not store a copy of the required certificate, for example, because it was previously erased from the device, it may use the hash as described for the second aspect.

The invention provides a method in a computerized device. The method comprises: while a smart card is coupled to said computerized device on a first occasion: receiving an indication that a certain certificate stored in said smart card is to be used for a particular purpose in said computerized device; importing said certain certificate to said computerized device; calculating a hash of said certain certificate; storing said hash in said computerized device; and on a later occasion at which said computerized device does not store said certain certificate: importing another certificate to said computerized device; calculating a hash of said other certificate and comparing said hash of said other certificate to said stored hash; and if said hash of said other certificate and said stored hash are identical, using said other certificate for said particular purpose in said computerized device.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a schematic diagram of an exemplary system comprising a smart card, a smart card reader and computerized devices;

Figure 2 is a block diagram of an exemplary computerized device;

Figure 3 is a block diagram of an exemplary smart card reader;

Figure 4 is a block diagram of an exemplary smart card;

Figure 5 is a flowchart of an exemplary method to enable the use of a certificate stored in a smart card; and

Figure 6 is a flowchart of another exemplary method to enable the use of a certificate stored in a smart card.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

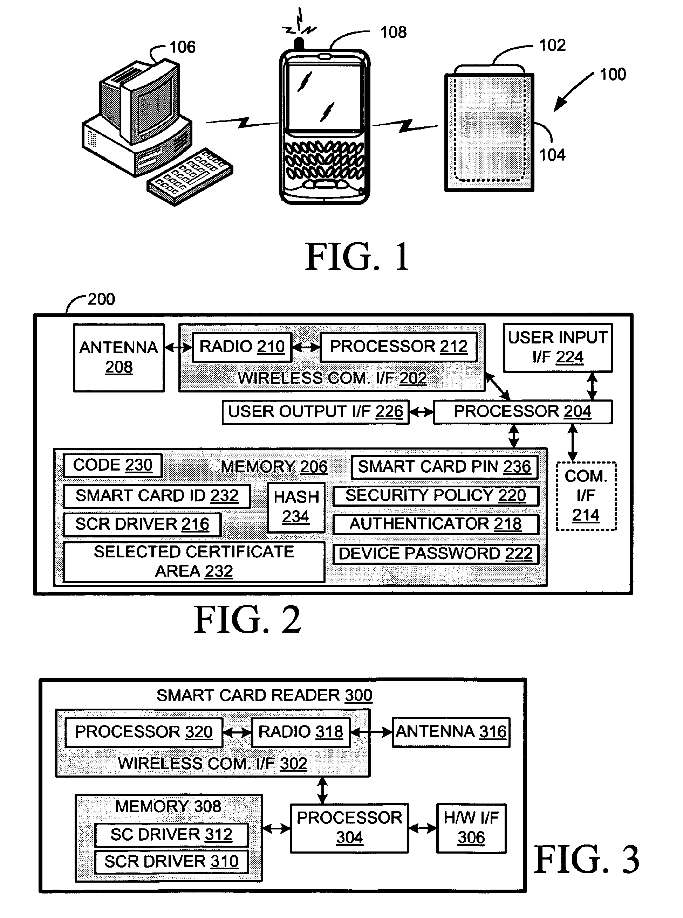

Figure 1 is a schematic diagram of an exemplary system 100 comprising a SC 102, a smart card reader (SCR) 104 and computerized devices 106 and 108.

Smart cards are personalized security devices, defined by the IS07816 standard and its derivatives, as published by the International Organization for Standardization. A smart card may have a form factor of a credit card and may include a semiconductor device. The semiconductor device may include a memory that can be programmed with security information (e.g. a private decryption key, a private signing key, biometrics, an authentication certificate, etc.), and may include a decryption engine, e.g., a processor and/or dedicated logic, for example dedicated decryption logic and/or dedicated signing logic. A smart card may include a connector for powering the semiconductor device and performing serial communication with an external device. A smart card may be used for visual identification, time cards, door access, and the like.

A SCR is a device that can communicate with both the SC and a computerized device and can therefore be used to couple them. The SCR may include one or more driver applications to communicate with the SC and with the computerized device.

Some smart card readers are able to be mechanically and electrically coupled to the computerized device. For example, some smart card readers are designed to be permanently installed inside a computerized device such as a desktop computer. Other smart card readers, for example, those in the form factor of a PCMCIA (Personal Computer Memory Card International Association) card, are designed to be easily installable and removable at an appropriate bay in a mobile computerized device such as a laptop computer. Other smart card readers are designed to connect to a computerized device via an electrical cable.

However, smart card readers that are mechanically disconnected from the computerized device and can communicate with the computerized device using wireless communication are known. Since a wireless smart card reader does not require mechanical coupling to the computerized device, it can in principle maintain parallel communication sessions with two or more computerized devices via the wireless communication.

Although Figure 1 shows smart card 102 inserted into with SCR 104, embodiments of this invention are equally applicable to contactless smart cards that communicate with their smart card readers via other means, for example, using radio frequency identification (RFID) technology.

Embodiments of the invention are applicable to any computerized device, whether stationary or mobile, that is able to communicate with a SCR. For example, the communication may be possible via a wired, wireless or optical communication means.

A non-exhaustive list of examples for devices 106 and 108 includes any of the following computerized devices, for example, server computers, notebook computers, laptop computers, mobile computers, mobile terminals, pocket computers, desktop personal computers, personal digital assistants (PDAs), handheld computers, cellular telephones, MP3 players, and the like.

In exemplary system 100, computerized device 108 is able to communicate with SCR 104 and via SCR 104, with SC 102. In addition computerized device 108 is able to communicate with computerized device 106.

Figure 2 is a block diagram of an exemplary computerized device 200, according to some embodiments of the invention. Device 200 is an example of device 108.

Device 200 comprises a communication interface 202, a processor 204 coupled to communication interface 202 and a memory 206 coupled to processor 204. Memory 206 may be fixed in or removable from device 200. Processor 204 and memory 206 may be part of the same integrated circuit or in separate integrated circuits.

In the example shown in Figure 2, communication interface 202 is a wireless communication interface 202 and device 200 also comprises an antenna 208. Wireless communication interface 202 comprises a radio 210 coupled to antenna 208, and a processor 212 coupled to radio 210. Wireless communication interface 202 and processor 204 may be part of the same integrated circuit or in separate integrated circuits.

Device 108 may be able to communicate with SCR 104 via communication interface 202 and may be able to communicate with device 106 via communication interface 202. Alternatively, or in addition, device 108 may include a communication interface 214 and may be able to communicate with device 106 via communication interface 214.

Memory 206 stores a SCR driver 216, an authenticator 218, a security policy 220 and a device password 222. Device 200 includes a human input interface 224, such as a keyboard, and a human output interface 226, such as a display. As part of an authentication process, user output interface 226 may prompt the user to enter a device password using user input interface 224, and authenticator 218 may compare the entered password to device password 222.

Security policy 220 may be predefined and/or downloadable to device 108 from device 106, and may define security related parameters and behaviors for device 108. For example, security policy 220 may define if and for what purpose an authentication password that is stored on a smart card, and device password 222, are to be used and may define qualities of these passwords. In other examples, security policy 220 may define whether a two-factor challenge-response authentication is to be used or not, whether or not weak certificates are permitted, and how to treat revoked, invalid or untrusted certificates.

Memory 206 also stores executable code 230 which, when executed by processor 204, causes device 200 to perform its part in the methods described hereinbelow.

Figure 3 is a block diagram of an exemplary SCR 300, according to some embodiments of the invention. SCR 300 is an example of SCR 104.

SCR 300 includes a communication interface 302, a processor 304 coupled to wireless communication interface 302, a hardware interface 306, and a memory 308 coupled to processor 304. For example, hardware interface 306 is a connector that mates to a corresponding connector with contact pins on a smart card. Memory 308 may be fixed in or removable from smart card reader 300. Memory 308 may be embedded or partially embedded in processor 304. Memory 308 stores a smart card reader driver 310 and a smart card driver 312.

Processor 304 and memory 308 may be part of the same integrated circuit or in separate integrated circuits.

In the example shown in Figure 3, communication interface 302 is a wireless communication interface 302 and SCR 300 also comprises an antenna 316. Wireless communication interface 302 comprises a radio 318 coupled to antenna 316, and a processor 320 coupled to radio 318. Wireless communication interface 302 and processor 304 may be part of the same integrated circuit or in separate integrated circuits.

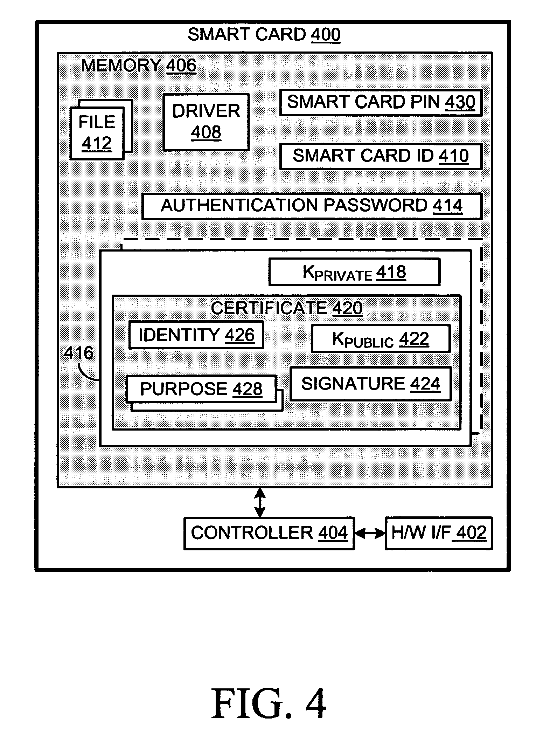

Figure 4 is a block diagram of an exemplary SC 400, according to some embodiments of the invention. SC 400 is an example of SC 102. SC 400 includes a hardware interface 402, a controller 404 coupled to hardware interface 402, and a memory 406 coupled to controller 404.

Memory 406 stores a driver 408 to handle functionality of SC 400, a smart card identification 410, for example a serial number, and one or more files 412 with information about the smart card's owner and/or any other information. Memory 406 may store an authentication password 414 to be used in conjunction with authenticator 218 of SCR 300. As part of an authentication process, user output interface 226 may prompt the user to enter an authenticator password using user input interface 224 and authenticator 218 may compare the entered password to authentication password 414.

Memory 406 may store one or more pairs 416 each comprising a private key 418 (K_{PRIVATE}) and a certificate 420. Any of certificates 420 may comprise a public key (K_{PUBLIC}) 422 associated with private key 418, a signature 424, identification information 426 and one or more definitions 428 of purposes assigned to the certificate.

Memory 406 may store in addition a smart card PIN (Personal Identification Number) 430.

A non-exhaustive list of examples for antennae 208 and 316 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples of communication protocols with which communication interfaces 202 and 302 may be compatible includes Bluetooth®, ZigBee™, radio frequency identification (RFID), ultra wideband (UWB), IEEE 802.11, and proprietary communication protocols.

A non-exhaustive list of examples for processors 204, 212, 304 and 320 and controller 404 includes a central processing unit (CPU), a digital signal processor (DSP), a reduced instruction set computer (RISC), a complex instruction set computer (CISC) and the like. Furthermore, processors 206, 218, 306 and 318 may be part of application specific integrated circuits (ASICs) or may be a part of application specific standard products (ASSPs).

A non-exhaustive list of examples for memories 206, 308 and 406 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Device 200, SCR 300 and SC 400 include additional components which are not shown in Figures 2, 3 and 4 and which, for clarity, are not described herein.

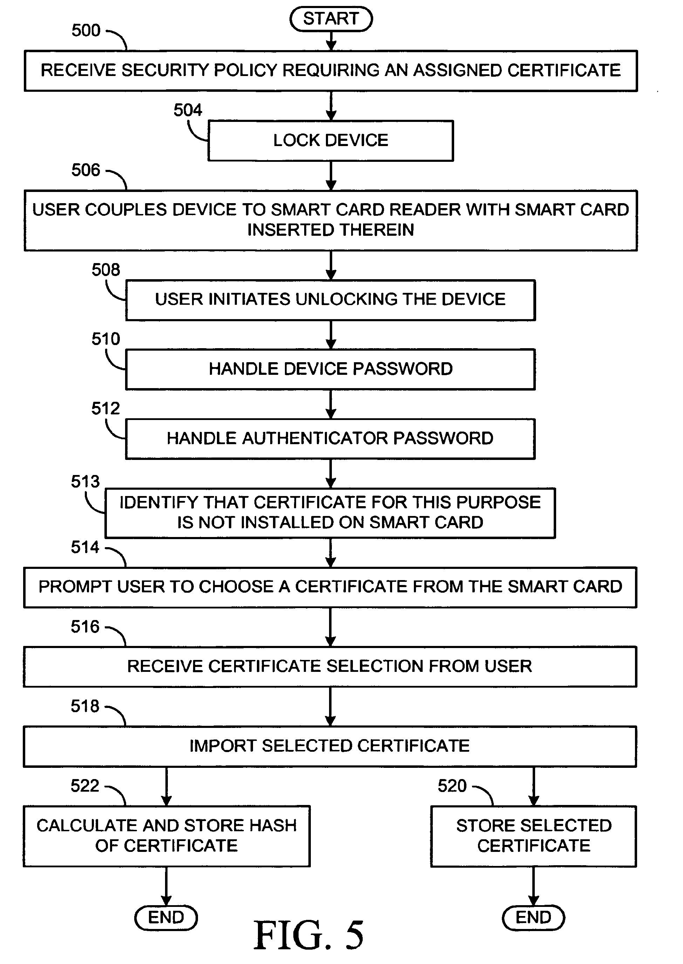

Figure 5 is a flowchart of an exemplary method to enable use of a certificate stored in smart card 400.

At 500, device 200 stores in memory 206 security policy 220 that requires a certificate installed in SC 400 for a particular purpose. For example, security policy 220 may require a certificate for the purpose of authentication of a user, two-factor authentication challenge/response, encryption of information, signing information, securing web browsing, login into a WEB service and/or providing access to a network or a device.

If device 200 is not already locked, at 504, device 200 may become locked. At 506, a user that wants to perform an operation involving device 200 couples SC 400 to SCR 300 and SCR 300 to device 200. At 508, the user initializes a process of authenticating himself or herself to device 200, for example, by turning on device 200 or by activating user input interface 224 in a pre-defined manner.

At 510, device 200 may prompt the user to set a new device password and may store the received device password as device password 222. Otherwise, if device password 222 is already defined, device 200 may prompt the user to enter a device password and may compare the entered password to a value stored in device password 222.

At 512, device 200 may prompt the user to set a new authentication password and may store the received authentication password as authentication password 414 in memory 406 of SC 400. Otherwise, if authentication password 414 is already defined, device 200 may prompt the user to enter an authentication password and may compare the entered password to a value stored in authentication password 414.

At 513, device 200 identifies that SC 400 does not store a certificate that is assigned with the particular purpose required by security policy 220.

At 514, device 200 may prompt the user to select one of certificates 420 for the particular purpose defined in security policy 220. At 516, device 200 receives from the user a selection of one of certificates 420. At 518, device 200 imports the selected certificate from SC 400.

At 520, device 200 may store a copy of the selected certificate into a selected certificate store area 232 in memory 206. At 522, device 200 may calculate a hash 234 of the selected certificate and may store hash 234 in memory 206.

Device 200 may perform only one of boxes 520 and 522, or may perform both.

Many modifications to this method are contemplated. For example, the requirement that a certificate installed in SC 400 be used for a particular purpose may be enabled by the user of device 200, rather than from a security policy 220. In another example, if device 200 has already imported the certificates from SC 400 (for other purposes), then device 200 may determine already after 500 that a certificate for this particular purpose is not installed on SC 400.

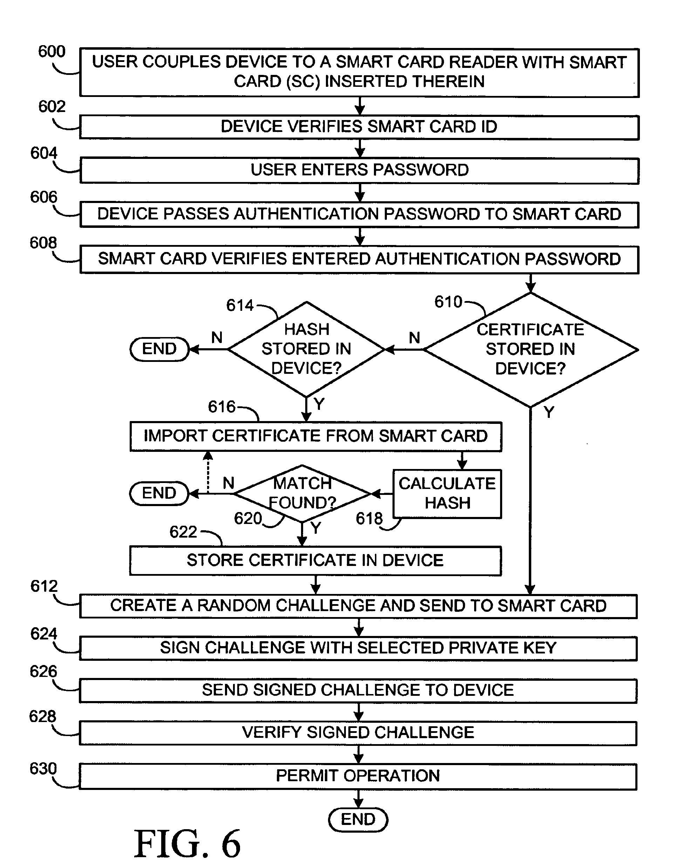

Figure 6 is a flowchart of another exemplary method to enable the use of a certificate stored in a smart card to perform an operation that requires a particular certificate. Device 200 may have been upgraded and information about the particular certificate, or even a copy of the particular certificate stored in device 200, may have been deleted from device 200 during the upgrade. At 600, a user couples SC 400 to SCR 300 and SCR 300 to device 200. At 602, device 200 verifies whether it recognizes smart card 400. For example, device 200 may read smart card identifier 410 from SC 400 and may compare it to a smart card identifier 232 previously stored in memory 206.

At 604, device 200 prompts the user to enter an authentication password and at 606, device 200 passes the password entered by the user to SC 400 for verification. At 608, SC 400 verifies whether the entered password is identical to authentication password 414.

If, as shown at 610, a copy of the particular certificate is stored in area 232, the method may continue to 612. If a copy of the certificate is not stored in area 232 and a hash of the particular certificate is not stored in hash 234, the method may terminate, as shown at 614. If, however, a hash of the particular certificate is stored in hash 234, the method may continue to 616.

At 616, device 200 imports one of the certificates stored in SC 400 and at 618, device 200 calculates a hash of the imported certificate. At 620, device 200 compares the calculated hash to hash 234. If the calculated hash is not identical to hash 234, the method may continue to 616 to check other certificates stored on SC 400, or may terminate, if all certificates on SC 400 were checked and no match was found. Although the flowchart of Figure 6 shows the device importing the certificates one at a time, the device may import all of the certificates and then check them one at a time.

If, however, device 200 imports a certificate and finds that the hash of the certificate is identical to hash 234, at 622, device 200 may store the imported certificate in area 232. The method may continue to 612.

At 612, device 200 generates a random challenge and sends the challenge and an identification of the certificate stored in area 232 to SC 400. Using the private key paired with the selected certificate, SC 400 signs the challenge at 624, and at 626, SC 400 sends the signed challenge to device 200.

Using the certificate stored in area 232, device 200 verifies at 628 that the challenge is signed with the private key paired with that certificate. If the challenge is signed with the private key paired with the certificate stored in area 232, device 200 permits a desired operation, for example, unlocking device 200 for the user to use.

Computer-executable instructions for performing any portions of the above-described method may be stored on a form of computer readable media. Computer readable media includes volatile and nonvolatile, removable and non-removable media implemented in any method or technology for storage of information such as computer readable instructions, data structures, program modules or other data. Computer readable media includes, but is not limited to, random access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium which can be used to store the desired instructions and which can be accessed by device 108 and/or SCR 104, including by internet or other computer network forms of access.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a computerized device (108, 200), the method comprising:
while a smart card (102, 400) is coupled to said computerized device (108, 200) on a first occasion:
receiving an indication that a certain certificate stored in said smart card (102, 400) is to be used for a particular purpose in said computerized device (108, 200);
importing said certain certificate to said computerized device (108, 200);
calculating a hash (234) of said certain certificate; and
storing said hash (234) in said computerized device (108, 200); and
on a later occasion at which said computerized device (108, 200) does not store said certain certificate and while said smart card (102, 400) is coupled to said computerized device (108, 200):
identifying whether any certificate stored in said smart card (102, 400) is said certain certificate by importing one or more certificates stored in said smart card (102, 400) to said computerized device (108, 200) and for at least one imported certificate of said imported certificates:
calculating a hash of said imported certificate;
comparing said hash of said imported certificate to said stored hash (234); and
determining that said imported certificate is said certain certificate if said hash of said imported certificate and said stored hash (234) are identical; and
if any certificate stored in said smart card (102, 400) has been identified as said certain certificate, using said identified certificate for said particular purpose in said computerized device (108, 200).

2. The method of claim 1, wherein said particular purpose is authentication of a user, or encryption of information, or signing of information, or secure web browsing.

3. The method of claim 1 or claim 2, wherein said computerized device (108, 200) has been upgraded after storing said hash (234) in said computerized device (108, 200) and prior to said later occasion.

4. The method of any one of claims 1 to 3, wherein storing said hash (234) in said device (108, 200) comprises:
storing said hash (234) in a region of a memory (206) of said computerized device (108, 200) that is unaffected by upgrades to said computerized device (108, 200).

5. A computer-readable medium having computer-executable instructions thereon which, when executed by a computerized device (108, 200) that is coupled to a smart card reader (104, 300), result in the method of any one of claims 1 to 4.

6. A computerized device (200) comprising:
a communication interface (202) through which said device (200) is able to couple to a smart card reader (104, 300);
a processor (204) coupled to said communication interface (202); and
a memory (206) coupled to said processor (204), said memory (206) able to store executable code means (230) which, when executed by said processor (204), is arranged, while a smart card (102, 400) is coupled to said computerized device ( 200) via said smart card reader (104, 300), to receive an indication that a certain certificate (420) stored in a smart card (102, 400) is to be used for a particular purpose in said computerized device (200), to import said certain certificate (420) from said smart card (102, 400) via said smart card reader (104, 300), to calculate a hash (234) of said certain certificate (420), and to store said hash (234) in said memory (206), and which is arranged, on a later occasion when said computerized device (200) does not store said certain certificate (420) and while said smart card (102, 400) is coupled to said computerized device (200), a. to identify whether any certificate stored in said smart card (102, 400) is said certain certificate (420) by importing one or more certificates stored in said smart card (102, 400) to said computerized device (200) and for at least one imported certificate of said imported certificates: to calculate a hash of said imported certificate, to compare said hash of said imported certificate to said stored hash (234), and to determine that said imported certificate is said certain certificate if said hash of said imported certificate and said stored hash (234) are identical, and b. if any certificate stored in said smart card (102, 400) has been identified as said certain certificate, to use said identified certificate for said particular purpose in said computerized device (108, 200).

7. The computerized device (200) of claim 6, wherein said particular purpose is authentication of a user, or encryption of information, or signing of information, or secure web browsing.

8. The computerized device (200) of claim 6 or claim 7, wherein said memory (206) includes a region that is unaffected by upgrades to said computerized device (200) and said executable code means (230), when executed by said processor (204), is arranged to store said hash (234) in said region.

## Patentansprüche

1. Verfahren in einer computerisierten Vorrichtung (108, 200), wobei das Verfahren aufweist:
während eine Smartcard (102, 400) mit der computerisierten Vorrichtung (108, 200) gekoppelt ist bei einem ersten Anlass:
Empfangen einer Anzeige, dass ein bestimmtes Zertifikat, das in der Smartcard (102, 400) gespeichert ist, für einen bestimmten Zweck in der computerisierten Vorrichtung (108, 200) verwendet werden soll;
Importieren des bestimmten Zertifikats in die computerisierte Vorrichtung (108, 200);
Berechnen eines Hashs (234) des bestimmten Zertifikats; und Speichern des Hashs (234) in der computerisierten Vorrichtung (108, 200); und
bei einem späteren Anlass, bei dem die computerisierte Vorrichtung (108, 200) das bestimmte Zertifikat nicht speichert, und während die Smartcard (102, 400) mit der computerisierten Vorrichtung (108, 200) gekoppelt ist:
Identifizieren, ob ein Zertifikat, das in der Smartcard (102, 400) gespeichert ist, das bestimmte Zertifikat ist, durch Importieren eines Zertifikats oder mehrerer Zertifikate, das/die in der Smartcard (102, 400) gespeichert ist/sind, in die computerisierte Vorrichtung (108, 200) und für zumindest ein importiertes Zertifikat der importierten Zertifikate:
Berechnen eines Hashs des importierten Zertifikats;
Vergleichen des Hashs des importierten Zertifikats mit dem gespeicherten Hash (234); und
Bestimmen, dass das importierte Zertifikat das bestimmte Zertifikat ist, wenn der Hash des importierten Zertifikats und der gespeicherte Hash (234) identisch sind; und
wenn ein Zertifikat, das in der Smartcard (102, 400) gespeichert ist, identifiziert wurde als das bestimmte Zertifikat, Verwenden des identifizierten Zertifikats für den bestimmten Zweck in der computerisierten Vorrichtung (108, 200).

2. Verfahren gemäß Anspruch 1, wobei der bestimmte Zweck eine Authentifizierung eines Benutzers oder eine Verschlüsselung von Information oder eine Signierung von Information oder ein sicheres Web-Browsing ist.

3. Verfahren gemäß Anspruch 1 oder Anspruch 2, wobei die computerisierte Vorrichtung (108, 200) nach dem Speichern des Hashs (234) in der computerisierten Vorrichtung (108, 200) und vor dem späteren Anlass aktualisiert wurde.

4. Verfahren gemäß einem der Ansprüche 1 bis 3, wobei das Speichern des Hashs (234) in der Vorrichtung (108, 200) aufweist:
Speichern des Hashs (234) in einem Bereich eines Speichers (206) der computerisierten Vorrichtung (108, 200), der nicht von Aktualisierungen der computerisierten Vorrichtung (108, 200) betroffen ist.

5. Computerlesbares Medium, das computerausführbare Anweisungen darauf hat, die bei Ausführung durch eine computerisierte Vorrichtung (108, 200), die mit einem Smartcard-Leser (104, 300) gekoppelt ist, zu dem Verfahren gemäß einem der Ansprüche 1 bis 4 führen.

6. Computergesteuerte Vorrichtung (200), die aufweist:
eine Kommunikationsschnittstelle (202), durch die die Vorrichtung (200) mit einem Smartcard-Leser (104, 300) gekoppelt werden kann;
einen Prozessor (204), der mit der Kommunikationsschnittstelle (202) gekoppelt ist; und
einen Speicher (206), der mit dem Prozessor (204) gekoppelt ist, wobei der Speicher (206) ausführbare Code-Mittel (230) speichern kann, das bei Ausführung durch den Prozessor (204) ausgebildet ist, während eine Smartcard (102, 400) mit der computerisierten Vorrichtung (200) über den Smartcard-Leser (104, 300) gekoppelt ist, zum Empfangen einer Anzeige,
dass ein bestimmtes Zertifikat (420), das in einer Smartcard (102, 400) gespeichert ist, für einen bestimmten Zweck in der computerisierten Vorrichtung (108, 200) verwendet werden soll, zum Importieren des bestimmten Zertifikats (420) von der Smartcard (102, 400) über den Smartcard-Leser (104, 300), zum Berechnen eines Hashs (234) des bestimmten Zertifikats (420), und zum Speichern des Hashs (234) in dem Speicher (206), und das ausgebildet ist, bei einem späteren Anlass, wenn die computerisierte Vorrichtung (200) das bestimmte Zertifikat (420) nicht speichert, und während die Smartcard (102, 400) mit der computerisierten Vorrichtung (108, 200) gekoppelt ist, a. zum Identifizieren, ob ein Zertifikat,
das in der Smartcard (102, 400) gespeichert ist, das bestimmte Zertifikat (420) ist, durch Importieren eines Zertifikats oder mehrerer Zertifikate,
das/die in der Smartcard (102, 400) gespeichert ist/sind, in die computerisierte Vorrichtung (200) und für zumindest ein importiertes Zertifikat der importierten Zertifikate: zum Berechnen eines Hashs des importierten Zertifikats, zum Vergleichen des Hashs des importierten Zertifikats mit dem gespeicherten Hash (234), und zum Bestimmen, dass das importierte Zertifikat das bestimmte Zertifikat ist, wenn der Hash des importierten Zertifikats und der gespeicherte Hash (234) identisch sind, und b. wenn ein Zertifikat, das in der Smartcard (102, 400) gespeichert ist, identifiziert wurde als das bestimmte Zertifikat, zum Verwenden des identifizierten Zertifikats für den bestimmten Zweck in der computerisierten Vorrichtung (108, 200).

7. Computergesteuerte Vorrichtung (200) gemäß Anspruch 6, wobei der bestimmte Zweck eine Authentifizierung eines Benutzers oder eine Verschlüsselung von Information oder eine Signierung von Information oder ein sicheres Web-Browsing ist.

8. Computergesteuerte Vorrichtung (200) gemäß Anspruch 6 oder Anspruch 7, wobei der Speicher (206) einen Bereich umfasst, der nicht von Aktualisierungen der computerisierten Vorrichtung (200) betroffen ist, und das ausführbare Code-Mittel (230) bei Ausführung durch den Prozessor (204) ausgebildet ist zum Speichern des Hashs (234) in dem Bereich.

## Revendications

1. Procédé dans un dispositif informatisé (108, 200), le procédé comprenant,
dès qu'une carte à puce (102, 400) est couplée audit dispositif informatisé (108, 200), le fait :
de recevoir une indication selon laquelle un certain certificat stocké dans ladite carte à puce (102, 400) doit être utilisé dans un but particulier dans ledit dispositif informatisé (108, 200) ;
d'importer ledit certain certificat audit dispositif informatisé (108, 200) ;
de calculer un hachage (234) dudit certain certificat ; et
de stocker ledit hachage (234) dans ledit dispositif informatisé (108, 200) ; et
à un moment ultérieur, lorsque ledit dispositif informatisé (108, 200) ne stocke pas ledit certain certificat et alors que ladite carte à puce (102, 400) est couplée audit dispositif informatisé (108, 200), le fiait :
d'identifier si un certificat quelconque stocké dans ladite carte à puce (102, 400) est ledit certain certificat en important un ou plusieurs certificats stockés dans ladite carte à puce (102, 400) audit dispositif informatisé (108, 200) et pour au moins un certificat importé parmi lesdits certificats importées :
de calculer un hachage dudit certificat importé ;
de comparer ledit hachage dudit certificat importé audit hachage stocké (234) ; et
de déterminer que ledit certificat importé est ledit certain certificat si ledit hachage dudit certificat importé et ledit hachage stocké (234) sont identiques ; et
d'utiliser, si un certificat quelconque stocké dans ladite carte à puce (102, 400) a été identifié comme étant ledit certain certificat, ledit certificat identifié dans ledit but particulier dans ledit dispositif informatisé (108, 200).

2. Procédé de la revendication 1, dans lequel ledit but particulier est l'authentification d'un utilisateur, ou un cryptage d'informations, ou la signature d'informations, ou une navigation web sécurisée.

3. Procédé de la revendication 1 ou 2, dans lequel ledit dispositif informatisé (108, 200) a été mis à niveau après stockage dudit hachage (234) dans ledit dispositif informatisé (108, 200) et avant ledit moment ultérieur.

4. Procédé de l'une quelconque des revendications 1 à 3, dans lequel le stockage dudit hachage (234) dans ledit dispositif (108, 200) comprend le fait :
de stocker ledit hachage (234) dans une région d'une mémoire (206) dudit dispositif informatisé (108, 200) qui n'est pas touchée par les mises à niveau audit dispositif informatisé (108, 200).

5. Support lisible par ordinateur sur lequel se trouvent des instructions exécutables par ordinateur qui, lorsqu'elles sont exécutées par un dispositif informatisé (108, 200) qui est couplé à un lecteur (104, 300) de carte à puce, aboutissent au procédé de l'une quelconque des revendications 1 à 4.

6. Dispositif informatisé (200) comprenant :
une interface de communication (202) à travers laquelle ledit dispositif (200) peut s'accoupler à un lecteur (104, 300) de carte à puce ;
un processeur (204) couplé à ladite interface de communication (202) ; et
une mémoire (206) couplée audit processeur (204), ladite mémoire (206) étant capable de stocker un moyen (230) de code exécutable qui, lorsqu'il est exécuté par ledit processeur (204), est agencé, dès qu'une carte à puce (102, 400) est couplée audit dispositif informatisé (200) via ledit lecteur (104, 300) de carte à puce, pour recevoir une indication selon laquelle un certain certificat (420) stocké dans une carte à puce (102, 400) doit être utilisé dans un but particulier dans ledit dispositif informatisé (200), pour importer ledit certain certificat (420) à partir de ladite carte à puce (102, 400) via ledit lecteur de carte à puce (104, 300), pour calculer un hachage (234) dudit certain certificat (420), et pour stocker ledit hachage (234) dans ladite mémoire (206), et qui est agencé, à un moment ultérieur lorsque ledit dispositif informatisé (200) ne stocke pas ledit certain certificat (420) et alors que ladite carte à puce (102, 400) est couplée audit dispositif informatisé (200), a. pour identifier si un certificat quelconque stocké dans ladite carte à puce (102, 400) est ledit certain certificat (420) en important un ou plusieurs certificats stockés dans ladite carte à puce (102, 400) audit dispositif informatisé (200) et pour au moins un certificat importé desdits certificats importées : pour calculer un hachage dudit certificat importé, pour comparer ledit hachage dudit certificat importé audit hachage stocké (234) et pour déterminer que ledit certificat importé est ledit certain certificat si ledit hachage dudit certificat importé et ledit hachage stocké (234) sont identiques, et b. si un certificat quelconque stocké dans ladite carte à puce (102, 400) a été identifié comme étant ledit certain certificat, pour utiliser ledit certificat identifié dans ledit but particulier dans ledit dispositif informatisé (108, 200).

7. Dispositif informatisé (200) de la revendication 6, dans lequel ledit but particulier est l'authentification d'un utilisateur, un cryptage d'informations, la signature d'informations ou une navigation web sécurisée.

8. Dispositif informatisé (200) de la revendication 6 ou 7, dans lequel ladite mémoire (206) comporte une région qui n' est pas touchée par des mises à niveau audit dispositif informatisé (200) et ledit moyen (230) de code exécutable, lorsqu'il est exécuté par ledit processeur (204), 1 est agencé pour stocker ledit hachage (234) dans ladite région.
